# EUROPEAN PATENT SPECIFICATION

(11) **EP 3 477 881 B1**
(45) Date of publication and mention of the grant of the patent: **24.11.2021**
(21) Application number: 17841041.1
(22) Date of filing: 15.08.2017
(51) Int. Cl.: H04L 1/00, H04L 1/16, H04L 1/18

(54) **DATA TRANSMISSION AND DATA PROCESSING METHOD AND DEVICE**
DATENÜBERTRAGUNG SOWIE DATENVERARBEITUNGSVERFAHREN UND VORRICHTUNG
PROCÉDÉ ET DISPOSITIF DE TRANSMISSION DE DONNÉES ET DE TRAITEMENT DE DONNÉES

(30) Priority: 17.08.2016 CN 201610681997
(43) Date of publication of application: 01.05.2019
(73) Proprietor: Huawei Technologies Co., Ltd., Longgang District Shenzhen, Guangdong 518129 (CN)
(72) Inventor: LIU, Jing, Shenzhen Guangdong 518129 (CN); ZENG, Qinghai, Shenzhen Guangdong 518129 (CN)
(74) Representative: Pfenning, Meinig & Partner mbB
(86) International application number: PCT/CN2017/097522
(87) International publication number: WO 2018/033069

(56) References cited:
- CN-A- 101 938 334
- CN-A- 103 647 621
- CN-A- 105 450 357
- CN-A- 105 515 733
- US-A1- 2003 123 409
- US-A1- 2005 160 346
- US-A1- 2008 151 776
- US-A1- 2015 100 843

## Description

This application claims priority to Chinese Patent Application No. 201610681997.0, filed with the State Intellectual Property Office on August 17, 2016 and entitled "DATA TRANSMISSION METHOD AND APPARATUS, AND DATA PROCESSING METHOD AND APPARATUS".

### TECHNICAL FIELD

This application relates to the field of communications technologies, and in particular, to a data transmission method and apparatus, and a data processing method and apparatus.

### BACKGROUND

In an existing LTE (Long Term Evolution, Long Term Evolution) system, data transmission reliability is ensured by using a two-layer retransmission mechanism, including: HARQ (Hybrid Automatic Repeat Request, hybrid automatic repeat request) of a MAC (Medium Access Control, Medium Access Control) layer, and ARQ (Auto Repeat Request, automatic repeat request) of an RLC (Radio Link Control, Radio Link Control) layer, and consequently a data transmission latency is increased. For both HARQ and ARQ, after a transmit end sends data to a receive end, the receive end feeds back an information receiving status to the transmit end. If the data is correctly received, the receive end feeds back an ACK (Acknowledgement, acknowledgement). If the data is incorrectly received, the receive end feeds back a NACK (Negative Acknowledgement, negative acknowledgement). After receiving a NACK feedback from the receive end, the transmit end retransmits the data to the receive end.

Downlink HARQ is used as an example. After determining a quantity of PRBs (physical resource block, physical resource block) allocated to a terminal, a base station determines an MCS (Modulation and Coding Scheme, modulation and coding scheme) based on CQI (Channel Quality Indicator, channel quality indicator) information fed back by the terminal. Finally, the base station determines, through table lookup and based on the quantity of PRBs and the MCS, a size of a TB (Transport Block, transport block) scheduled in a current TTI (Transmission Time Interval, transmission time interval). A MAC layer of the base station notifies an RLC layer of the determined TB block size, so that the RLC layer segments/reassembles an RLC SDU (Service Data Unit, service data unit) based on the determined TB block size. The MAC layer multiplexes RLC PDUs (Protocol Data Unit, protocol data unit) received on logical channels to generate a TB block, and sends the generated TB block to a PHY (Physical, physical) layer for processing.

After adding a CRC (Cyclic Redundancy Check, cyclic redundancy check) check code to the received TB block, the PHY layer performs separation processing to obtain a CB (Code Block, code block), and adds a CRC check code to each CB. Finally, after channel coding is performed on each CB by using a Turbo code, the CB on which channel coding has been performed is mapped to a PRB and then sent to the terminal. Once the terminal finds that an error occurs in a CRC check corresponding to one of the received CBs, the terminal considers that transmission of an entire TB block fails, and feeds back NACK information to the base station, to trigger the base station to retransmit the entire TB block.

To further reduce a data transmission latency and ensure data transmission reliability, a currently available solution is mainly that in a CB generation process, one or more CBs are newly generated by using outer encoding in addition to a CB generated according to an existing mechanism, where the newly generated CB contains redundancy information of another CB. If a transmitter contains these newly generated CBs during initial transmission, because these CBs can be used for both error detection and error correction, there is a quite high probability that a receiver can correctly decode a TB based on the received CBs, thereby avoiding a transmission latency caused by retransmission. If the transmitter does not contain these newly generated CBs during initial transmission, to reduce an amount of retransmitted data, the receiver needs to feed back a quantity of incorrectly received CBs to the transmitter. In this way, the transmitter performs CB granularity-based retransmission based on the feedback information from the receiver, and does not need to retransmit an entire TB, so that air interface resource overheads are reduced. However, in the foregoing solution, the receiver needs to feed back the quantity of incorrectly received CBs to the transmitter. In this case, feedback overheads of the receiver are increased, especially when the receiver incorrectly receives a huge quantity of CBs due to poor channel quality.

US2005160346A1 discloses a method to determine a number of transmitted FEC packets. A first set of RTP packet and FEC packet is generated. The receiver analyses the amount of received RTP and FEC packets, and feedback one of three states: shortage state, excess state and adequate state. The transmitter, upon reception of the feedback, increases, maintains or decreases the amount of FEC packets for the next transmission.

US2008151776A1 discloses a method to determine the number k of original RTP data packets and the number n-k of redundant packets based on the packet loss rate information computed from RTCP communication iteratively. The number of original RTP packets and of redundant packets is computed to minimize a packet error rate and a redundancy overhead.

US2015100843A1 discloses a method to determine the number of number of FEC blocks and the number of redundancy code packets for real time streams generated by the same application based on packet loss rate, processed data amount and protection strength of quality control information. It is also determined whether the number of coded packets enables to respect maximum delay difference between multiple streams of the application. The process is performed iteratively.

### SUMMARY

Independent claim 1 defines a data transmission method according to the invention. Independent claim 4 defines a corresponding data transmission apparatus according to the invention. Preferred embodiments are defined in the dependent claims.

### BRIEF DESCRIPTION OF DRAWINGS

FIG. 1 is a schematic flowchart of a data transmission method according to an embodiment of this application;
FIG. 2 is a schematic diagram of generating a CB according to an embodiment of this application;
FIG. 3 is a schematic diagram of feedback receiving according to an embodiment of this application;
FIG. 4 is a schematic diagram of feedback receiving according to an embodiment of this application;
FIG. 5 is a schematic diagram of feedback receiving according to an embodiment of this application;
FIG. 6 is a schematic flowchart of a data transmission and processing method according to an embodiment of this application;
FIG. 7 is a schematic diagram of network coding according to an embodiment of this application;
FIG. 8 is a schematic structural diagram of a data transmission apparatus according to an embodiment of this application;
FIG. 9 is a schematic structural diagram of a data transmission apparatus according to an embodiment of this application;
FIG. 10 is a schematic structural diagram of a data transmission apparatus according to an embodiment of this application;
FIG. 11 is a schematic structural diagram of a data transmission apparatus according to an embodiment of this application;
FIG. 12 is a schematic structural diagram of a data processing apparatus according to an embodiment of this application; and
FIG. 13 is a schematic structural diagram of a data processing apparatus according to an embodiment of this application.

### DESCRIPTION OF EMBODIMENTS

Embodiments of this application are applicable to a 4G evolved system, such as an LTE system, a 5G system, or another communications system.

In the embodiments of this application, a terminal may be a wireless terminal, such as a mobile phone, a computer, a tablet computer, a personal digital assistant (English: personal digital assistant, PDA for short), a mobile Internet device (English: mobile Internet device, MID for short), a wearable device, an Internet Protocol (English: Internet Protocol, IP for short) phone, a network printer, or an e-book reader (English: e-book reader).

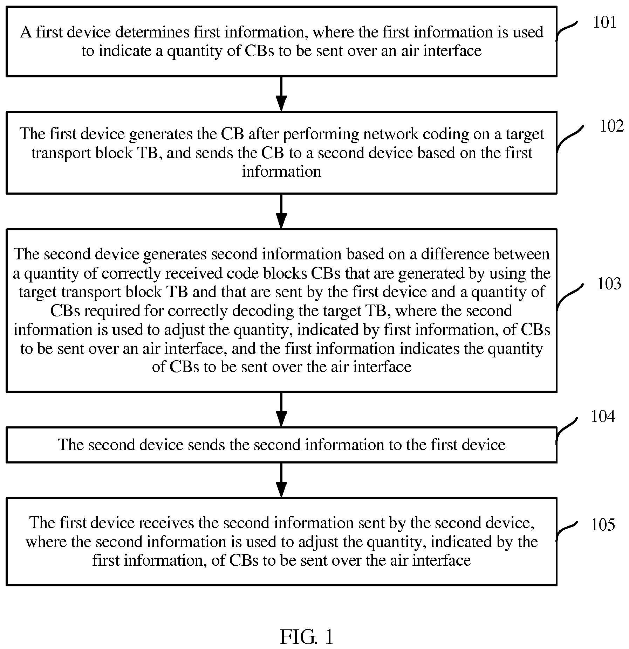

Based on the foregoing descriptions, FIG. 1 is a schematic flowchart of a data transmission method according to an embodiment of this application.

A first device in the method shown in FIG. 1 may be an interface device that can work in a wireless environment, such as a terminal, a base station, a node, a base station controller, or an access point (Access Point, AP).

Referring to FIG. 1, the method includes the following steps.

Step 101: The first device determines first information, where the first information is used to indicate a quantity of CBs to be sent over an air interface.

It should be noted that, that the first information is used to indicate a quantity of CBs to be sent over an air interface means that the first information instructs the first device to send, over the air interface, a specified quantity of CBs in all CBs generated by using a target TB.

Step 102: The first device generates the CB after performing network coding on a target transport block TB, and sends the CB to a second device based on the first information.

Step 103: The second device generates second information based on a difference between a quantity of correctly received code blocks CBs that are generated by using the target transport block TB and that are sent by the first device and a quantity of CBs required for correctly decoding the target TB, where the second information is used to adjust the quantity, indicated by the first information, of CBs to be sent over the air interface, and the first information indicates the quantity of CBs to be sent over the air interface.

Step 104: The second device sends the second information to the first device.

Step 105: The first device receives the second information sent by the second device, where the second information is used to adjust the quantity, indicated by the first information, of CBs to be sent over the air interface.

In step 101, if the first device is a network device, for example, a base station, the first information may be determined by using a MAC layer of the first device, or the first information may be determined by a PHY layer of the first device.

If the first information is determined by the MAC layer of the first device, the MAC layer of the first device subsequently sends the determined first information to the PHY layer of the first device, so that the PHY layer sends a corresponding quantity of CBs over the air interface.

If the first information is determined by the PHY layer of the first device, the PHY layer of the first device determines, based on a size of the target TB, modulation and coding scheme MCS information that is determined based on CQI fed back by the second device, and physical resource block PRB allocation information, the quantity of CBs to be sent over the air interface, namely, the first information.

If the first device is a terminal, the first device needs to determine the first information based on an instruction of the second device. In this case, if the first information is determined by the MAC layer of the first device, the MAC layer of the first device may receive a MAC CE (control element, control element) sent by the second device, to determine the first information, where the MAC CE carries the first information; and the MAC layer of the first device may further send the first information to the PHY layer of the first device. If the first information is determined by the PHY layer of the first device, the PHY layer of the first device receives DCI sent by a PHY layer of the second device, where the DCI carries the first information.

In this embodiment of this application, the first information may be a specific value of CBs to be sent over the air interface, or may be an index value, where the index value is corresponding to the specific value of CBs to be sent over the air interface. In this manner, the first device and the second device may agree on, in advance, a specific value that is of CBs to be sent over the air interface and that is corresponding to each index value. A specific agreement manner is not limited in this embodiment of this application.

In this embodiment of this application, if the first device is a network device, the PHY layer of the first device may determine the first information based on the size of the target TB, the PRB allocation information, and the MCS information. Specifically, the PHY layer of the first device may determine a size of the CB by using the size of the TB and a specific network coding algorithm, determine a maximum currently transmitted bit by using a PRB and an MCS, and finally determine, based on the size of the CB and the maximum currently transmitted bit, a quantity of CBs that are allowed to be transmitted. Certainly, the foregoing is merely an example. Alternatively, the MAC layer or the PHY layer of the first device may specifically determine the first information in another manner, and this is not limited in this embodiment of this application.

In step 102, the target TB is any one of TBs generated by the MAC layer of the first device after multiplexing RLC PDUs received from different logical channels.

In this embodiment of this application, network coding needs to be performed before the CB is generated by using the target TB. The network coding means coding performed by using a fountain code (fountain codes) or the like, and the fountain code includes but is not limited to an LT (Luby Transform) code, and a Raptor code. In addition, in this embodiment of this application, after the CB is generated by using the target TB through network coding, each CB includes redundancy information of another CB. The first device only needs to send the specified quantity of CBs to the second device based on the determined first information, and when the second device correctly receives enough CBs, the second device can decode and restore the target TB based on the received CBs.

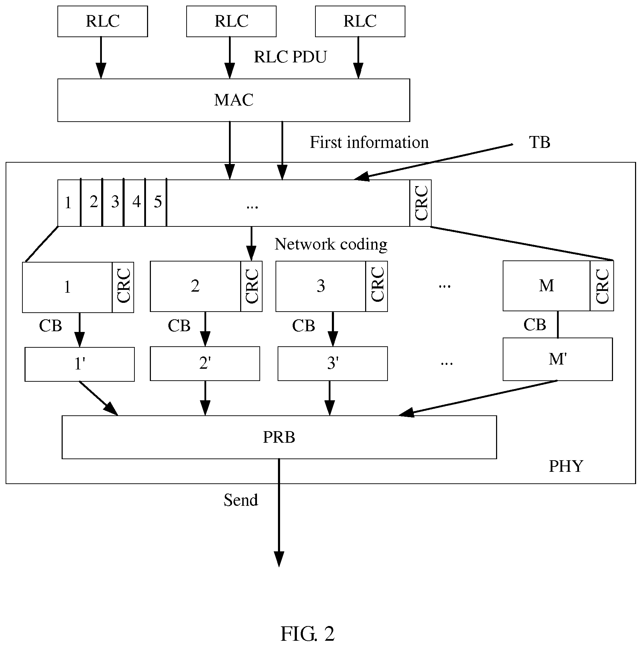

With reference to the foregoing descriptions, FIG. 2 is a schematic diagram of generating a CB according to an embodiment of this application.

In FIG. 2, the MAC layer multiplexes the RLC PDUs received from the logical channels to generate the target TB block, and sends the generated target TB block to the PHY layer for processing. In addition, the MAC layer sends the determined first information to the PHY layer.

After adding a CRC check code to the received TB block, the PHY layer performs network coding to generate the CB; separately adds the CRC check code to the specified quantity of CBs based on the received first information; performs Turbo coding on each CB; maps, to a PRB, data on which Turbo channel coding has been performed; and finally sends the CBs to a terminal over the air interface.

In this embodiment of this application, the second information may be implemented in a plurality of manners. In a possible implementation, the second information is the difference between the quantity of correctly received CBs that is determined by the second device and the quantity of CBs required for correctly decoding the target TB.

In this implementation, in step 103, if the second device determines that the difference between the quantity of correctly received CBs and the quantity of CBs required for correctly decoding the target TB is less than a first threshold, or the second device determines that the difference between the quantity of correctly received CBs and the quantity of CBs required for correctly decoding the target TB is greater than a second threshold, the second device generates the second information. The first threshold is less than or equal to the second threshold.

Correspondingly, in step 105, if the first device determines that the difference is less than the first threshold, the quantity, indicated by the first information, of CBs to be sent over the air interface is increased. Beyond the scope of the claims, if the first device determines that the difference is greater than the second threshold, the quantity, indicated by the first information, of CBs to be sent over the air interface is decreased.

In a possible implementation, the second information may be indicated by using a flag type. When a flag is set to True, the second information is used to instruct the first device to increase the quantity of CBs to be sent over the air interface. Certainly, in this implementation, the second information may alternatively be in another form. Details are not described herein.

In this implementation, in step 103, if the second device determines that the difference between the quantity of correctly received CBs generated by using the target TB and the quantity of CBs required for correctly decoding the target TB is less than the first threshold, the second device generates the second information used to instruct the first device to increase the quantity of CBs to be sent over the air interface.

In this implementation, in step 105, the first device starts a timer after sending the CB to the second device based on the first information. In this period, before the timer times out, if the first device determines that the first device receives the second information sent by the second device, the first device increases, based on the second information, the quantity of CBs to be sent over the air interface. When the timer times out, if the first device determines that the first device does not receive the second information sent by the second device, the first device decreases the quantity of CBs to be sent over the air interface.

In this embodiment of this application, the first device may increase, by adding a preset reference quantity of to-be-sent CBs to a quantity of CBs sent over the air interface last time, the quantity of CBs to be sent over the air interface. The first device may decrease, by subtracting the preset reference quantity of to-be-sent CBs from the quantity of CBs sent over the air interface last time, the quantity of CBs to be sent over the air interface. The preset reference quantity may be determined depending on an actual case. Details are not described herein.

It should be noted that timing duration of the timer is preset duration, and the preset duration may be determined depending on an actual case. Details are not described herein.

Optionally, in step 103, with reference to the foregoing descriptions, if determining that the difference between the quantity of correctly received CBs and the quantity of CBs required for correctly decoding the target TB is greater than or equal to the first threshold and is less than or equal to the second threshold, the second device no longer generates or sends the second information. Alternatively, if determining that the difference between the quantity of correctly received CBs generated by using the target TB and the quantity of CBs required for correctly decoding the target TB is greater than or equal to the first threshold, the second device no longer generates or sends the second information.

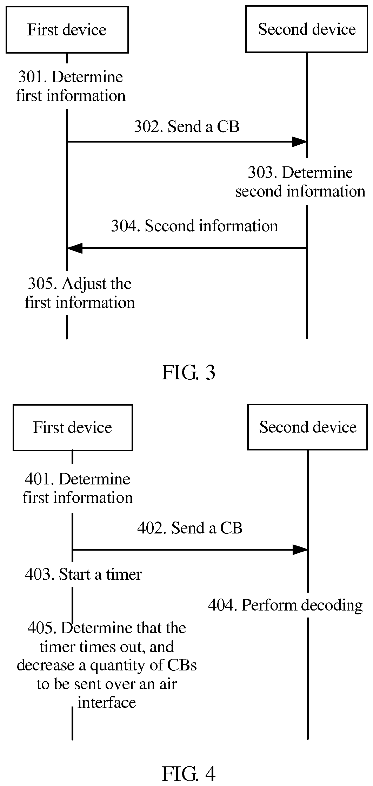

For example, with reference to the foregoing descriptions, FIG. 3 is a schematic diagram of feedback receiving according to a non claimed embodiment of this application.

Step 301: A first device determines first information.

For specific content of the first information, refer to the foregoing descriptions. Details are not described herein again.

Step 302: The first device sends a specified quantity of CBs to a second device based on the first information.

Step 303: If the second device determines that a difference between a quantity of correctly received CBs and a quantity of CBs required for correctly decoding the target TB is less than a first threshold, or the second device determines that a difference between a quantity of correctly received CBs and a quantity of CBs required for correctly decoding the target TB is greater than a second threshold, the second device generates second information.

Step 304: The second device sends the second information to the first device.

Step 305: The first device adjusts the first information based on the second information.

With reference to the foregoing descriptions, FIG. 4 is a schematic diagram of feedback receiving according to the invention.

Step 401: A first device determines first information.

For specific content of the first information, refer to the foregoing descriptions. Details are not described herein again.

Step 402: The first device sends a specified quantity of CBs to a second device based on the first information.

Step 403: The first device starts a timer.

Timing duration of the timer is preset duration.

Step 404: If the second device determines that a difference between a quantity of correctly received CBs and a quantity of CBs required for correctly decoding the target TB is greater than or equal to the first threshold and is less than or equal to the second threshold, the second device does not generate or send the second information.

Step 405: According to the invention, when the timer times out, if the first device does not receive the second information sent by the second device, the first device decreases the quantity of CBs to be sent over an air interface.

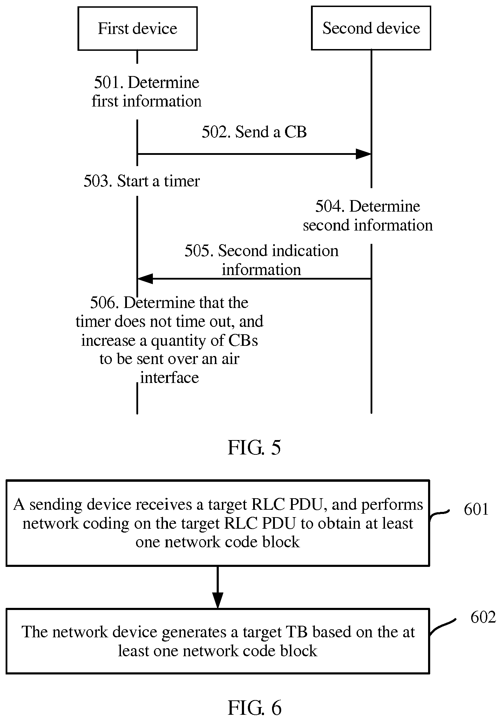

With reference to the foregoing descriptions, FIG. 5 is a schematic diagram of feedback receiving according to the invention.

Step 501: A first device determines first information.

For specific content of the first information, refer to the foregoing descriptions. Details are not described herein again.

Step 502: The first device sends a specified quantity of CBs to a second device based on the first information.

Step 503: The first device starts a timer.

Timing duration of the timer is preset duration.

Step 504: If the second device determines that a difference between a quantity of correctly received CBs generated by using a target TB and a quantity of CBs required for correctly decoding the target TB is less than a first threshold, the second device generates second information. The second information is used to instruct the first device to increase the quantity of CBs to be sent over an air interface.

Step 505: The second device sends the second information to the first device.

Step 506: According to the invention, the first device receives the second information sent by the second device, and when determining that the timer does not time out, increases the quantity of CBs to be sent over the air interface.

In step 105, the first device may further send, to the second device, coding indication information that is used to indicate whether a network coding function is used in a process of generating the CB by using the target TB, so that the second device determines whether to perform network decoding on the received CB.

Optionally, the coding indication information includes at least one of the following:
a MAC layer identifier, used to indicate a MAC layer that generates a CB through network coding;
a carrier identifier, used to indicate a carrier that carries a CB on which network coding has been performed;
a network slice (network slice) identifier, used to indicate a network slice that carries a CB on which network coding has been performed, where it should be noted that the network slice may be a logical network function combination that supports a communications service requirement of a specific use case; and
an air interface (air interface) type identifier, used to indicate a type of an air interface for sending a CB on which network coding has been performed. In this embodiment of this application, the air interface is also referred to as an air interface, which may be an interface between a terminal and a wireless access network. For example, the air interface may be a Uu interface or the like. This is not limited in this embodiment of this application.

Correspondingly, after step 104, if the second device receives the coding indication information sent by the first device, and determines, based on the coding indication information, that network encoding has been performed on the CB generated by using the target TB, the second device performs network decoding on the received CB and restores the target TB.

FIG. 6 is a schematic flowchart of a data transmission and processing method according to an embodiment of this application.

A sending device in the method shown in FIG. 6 may be an interface device that can work in a wireless environment, such as a terminal, a base station, a node, a base station controller, or an access point (Access Point, AP).

Referring to FIG. 6, the method includes the following steps.

Step 601: A sending device receives a target RLC PDU, and performs network coding on the target RLC PDU to obtain at least one network code block.

Step: 602: The network device generates a target TB based on the at least one network code block.

In step 601, a MAC layer of the sending device may receive the target RLC PDU, and after receiving the target RLC PDU, the MAC layer performs network coding on the received target RLC PDU to generate the at least one network code block. A size of each network code block is the same as a size of a CB generated by a PHY layer of the sending device. The network coding means coding performed by using a fountain code, and the fountain code includes but is not limited to an LT code and a Raptor code.

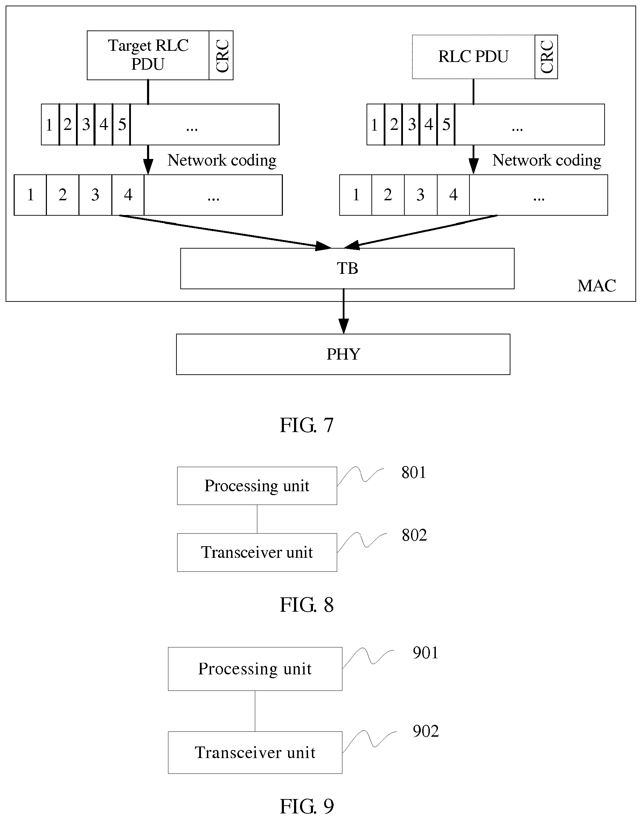

In step 602, the sending device generates the target TB based on the at least one generated network code block. Specifically, with reference to FIG. 7, after performing network coding on the received target RLC PDU, the sending device generates the at least one network code block. The sending device aggregates network code blocks generated by using all RLC PDUs to generate the target TB. The network code blocks included in the target TB may come from another RLC PDU in addition to the target RLC PDU. Subsequently, the MAC layer of the sending device sends the generated target TB to the PHY layer of the network device. After receiving the target TB, the PHY layer uses an existing LTE mechanism to divide the target TB into several CBs, perform channel coding after adding a CRC, and then send, over an air interface, the CBs on which channel coding has been performed. The sending device may repeat the foregoing process until the sending device receives an acknowledgement message sent by a receiver of the target TB. The acknowledgement message is used to indicate that the receiver has correctly decoded the target RLC PDU.

Optionally, each network code block includes attribute indication information, and the attribute indication information is used to indicate information about an RLC PDU to which a network code block including the attribute indication information belongs. After receiving each network code block, the receiver may determine, based on the attribute indication information, the RLC PDU to which each network code block belongs.

In the foregoing method, if the receiver receives the target TB and determines that the target RLC PDU can be restored based on the target TB, the receiver sends the acknowledgement message to the sending device; otherwise, the receiver does not send a feedback message to the sending device.

Based on a same technical concept, an embodiment of this application further provides a data transmission apparatus. The apparatus can perform the foregoing method embodiments.

FIG. 8 is a schematic structural diagram of a data transmission apparatus according to an embodiment of this application.

Referring to FIG. 8, the apparatus includes:
a processing unit 801, configured to: determine first information, where the first information is used to indicate a quantity of code blocks CBs to be sent over an air interface; generate the CB after performing network coding on a target transport block TB; and send the CB to a second device based on the first information; and
a transceiver unit 802, configured to receive second information sent by the second device, where the second information is used to adjust the quantity, indicated by the first information, of CBs to be sent over the air interface.

Optionally, the apparatus is an access network device; and the processing unit 801 is specifically configured to:
determine the first information by using a Medium Access Control MAC layer of the apparatus; or
determine the first information by using a physical PHY layer of the apparatus based on a size of the target TB, modulation and coding scheme MCS information, and physical resource block PRB allocation information.

Optionally, the apparatus is a terminal; and
the processing unit 801 is specifically configured to:
receive a MAC control element sent by the second device, where the MAC control element carries the first information; or
receive downlink control information DCI sent by the second device, where the DCI carries the first information.

Optionally, the second information is a difference between a quantity of correctly received CBs that is determined by the second device and a quantity of CBs required by the second device to correctly decode the target TB; and
the processing unit 801 is specifically configured to:
if the first device determines that the difference is less than a first threshold, increase the quantity, indicated by the first information, of CBs to be sent over the air interface; or
beyond the scope of the claims, if the first device determines that the difference is greater than a second threshold, decrease the quantity, indicated by the first information, of CBs to be sent over the air interface; where
the first threshold is less than or equal to the second threshold.

According to the invention, the processing unit 801 is specifically configured to:
start a timer; and
before the timer times out, if the apparatus receives the second information sent by the second device, increase, based on the second information, the quantity of CBs to be sent over the air interface; or
before the timer times out, if the apparatus does not receive the second information sent by the second device, decrease the quantity of CBs to be sent over the air interface.

Optionally, the transceiver unit 802 is further configured to:
send coding indication information to the second device, where the coding indication information is used to indicate whether a network coding function is used in a process of generating the CB by using the target TB.

Optionally, the coding indication information includes at least one of the following:
a MAC layer identifier;
a carrier identifier;
a network slice identifier; and
an air interface type identifier.

FIG. 9 is a schematic structural diagram of a data transmission apparatus according to an embodiment of this application.

Referring to FIG. 9, the apparatus includes:
a processing unit 901, configured to generate second information based on a difference between a quantity of correctly received code blocks CBs that are generated by using a target transport block TB and that are sent by a first device and a quantity of CBs required for correctly decoding the target TB, where the second information is used to adjust a quantity, indicated by first information, of CBs to be sent over an air interface, and the first information indicates the quantity of CBs to be sent over the air interface; and
a transceiver unit 902, configured to send the second information to the first device.

Optionally, the processing unit 901 is specifically configured to: if the difference between the quantity of correctly received CBs generated by using the target TB and the quantity of CBs required for correctly decoding the target TB is less than a first threshold, generate the second information used to instruct the first device to increase the quantity of CBs to be sent over the air interface.

Optionally, the transceiver unit 902 is further configured to: receive coding indication information sent by the first device, where the coding indication information is used to indicate whether a network coding function is used in a process of generating the CB by using the target TB.

The processing unit 901 is further configured to: if it is determined, based on the coding indication information, that network encoding has been performed on the CB generated by using the target TB, perform network decoding on the received CB, and restore the target TB.

Optionally, the coding indication information includes at least one of the following:
a Medium Access Control MAC layer identifier;
a carrier identifier;
a network slice identifier; and
an air interface type identifier.

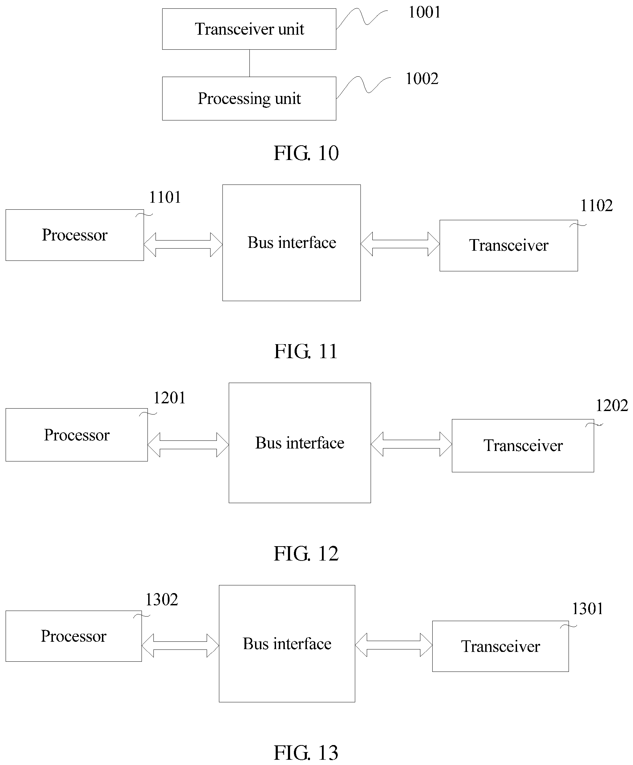

FIG. 10 is a schematic structural diagram of a data processing apparatus according to an embodiment of this application.

Referring to FIG. 10, the apparatus includes:
a transceiver unit 1001, configured to: receive a target protocol data unit RLC PDU, and perform network coding on the target RLC PDU to obtain at least one network code block; and
a processing unit 1002, configured to generate a target TB based on the at least one network code block.

Optionally, a size of each network code block is the same as a size of a CB generated by a physical PHY layer of the sending device.

Optionally, each network code block includes attribute indication information, and the attribute indication information is used to indicate information about an RLC PDU to which a network code block including the attribute indication information belongs.

FIG. 11 is a schematic structural diagram of a data transmission apparatus according to an embodiment of this application.

Referring to FIG. 11, the apparatus includes:
a processor 1101, configured to: determine first information, where the first information is used to indicate a quantity of code blocks CBs to be sent over an air interface; generate the CB after performing network coding on a target transport block TB; and send the CB to a second device based on the first information; and
a transceiver 1102, configured to receive second information sent by the second device, where the second information is used to adjust the quantity, indicated by the first information, of CBs to be sent over the air interface.

Optionally, the apparatus is an access network device; and
the processor 1101 is specifically configured to:
determine the first information by using a Medium Access Control MAC layer of the apparatus; or
determine the first information by using a physical PHY layer of the apparatus based on a size of the target TB, modulation and coding scheme MCS information, and physical resource block PRB allocation information.

Optionally, the apparatus is a terminal; and
the processor 1101 is specifically configured to:
receive a MAC control element sent by the second device, where the MAC control element carries the first information; or
receive downlink control information DCI sent by the second device, where the DCI carries the first information.

Optionally, the second information is a difference between a quantity of correctly received CBs that is determined by the second device and a quantity of CBs required by the second device to correctly decode the target TB; and
the processor 1101 is specifically configured to:
if the first device determines that the difference is less than a first threshold, increase the quantity, indicated by the first information, of CBs to be sent over the air interface; or
beyond the scope of the claims, if the first device determines that the difference is greater than a second threshold, decrease the quantity, indicated by the first information, of CBs to be sent over the air interface; where
the first threshold is less than or equal to the second threshold.

According to the invention, the processor 1101 is specifically configured to:
start a timer; and
before the timer times out, if the apparatus receives the second information sent by the second device, increase, based on the second information, the quantity of CBs to be sent over the air interface; or
before the timer times out, if the apparatus does not receive the second information sent by the second device, decrease the quantity of CBs to be sent over the air interface.

Optionally, the transceiver 1102 is further configured to:
send coding indication information to the second device, where the coding indication information is used to indicate whether a network coding function is used in a process of generating the CB by using the target TB.

Optionally, the coding indication information includes at least one of the following:
a MAC layer identifier;
a carrier identifier;
a network slice identifier; and
an air interface type identifier.

FIG. 12 is a schematic structural diagram of a data transmission apparatus according to an embodiment of this application.

Referring to FIG. 12, the apparatus includes:
a processor 1201, configured to generate second information based on a difference between a quantity of correctly received code blocks CBs that are generated by using a target transport block TB and that are sent by a first device and a quantity of CBs required for correctly decoding the target TB, where the second information is used to adjust a quantity, indicated by first information, of CBs to be sent over an air interface, and the first information indicates the quantity of CBs to be sent over the air interface; and
a transceiver 1202, configured to send the second information to the first device.

Optionally, the processor 1201 is specifically configured to:
if the difference between the quantity of correctly received CBs generated by using the target TB and the quantity of CBs required for correctly decoding the target TB is less than a first threshold, generate the second information used to instruct the first device to increase the quantity of CBs to be sent over the air interface.

Optionally, the transceiver 1202 is further configured to:
receive coding indication information sent by the first device, where the coding indication information is used to indicate whether a network coding function is used in a process of generating the CB by using the target TB.

The processor 1201 is further configured to: if it is determined, based on the coding indication information, that network encoding has been performed on the CB generated by using the target TB, perform network decoding on the received CB, and restore the target TB.

Optionally, the coding indication information includes at least one of the following:
a Medium Access Control MAC layer identifier;
a carrier identifier;
a network slice identifier; and
an air interface type identifier.

FIG. 13 is a schematic structural diagram of a data processing apparatus according to an embodiment of this application.

Referring to FIG. 13, the apparatus includes:
a transceiver 1301, configured to: receive a target protocol data unit RLC PDU, and perform network coding on the target RLC PDU to obtain at least one network code block; and
a processor 1302, configured to generate a target TB based on the at least one network code block.

Optionally, a size of each network code block is the same as a size of a CB generated by a physical PHY layer of the sending device.

Optionally, each network code block includes attribute indication information, and the attribute indication information is used to indicate information about an RLC PDU to which a network code block including the attribute indication information belongs.

In FIG. 11 to FIG. 13, the transceiver may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof. The processor may be a central processing unit (English: central processing unit, CPU for short), a network processor (English: network processor, NP for short), or a combination of a CPU and an NP. The processor may further include a hardware chip. The hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof.

Optionally, a bus interface may be further included in FIG. 11 to FIG. 13. The bus interface may include any quantity of interconnected buses and bridges, which are specifically linked by various circuits of one or more processors represented by the processor and a memory represented by the memory. The bus interface may further link various other circuits, such as a peripheral device, a voltage regulator, and a power management circuit. This is well known in the art, and therefore is not further described in this specification. The bus interface provides an interface. The transceiver provides a unit for communicating with various other devices on a transmission medium. The processor is responsible for bus architecture management and general processing. The memory may store data used when the processor performs an operation.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the scope of this application. This application is intended to cover these modifications and variations provided that they fall within the scope of the following claims of this application.

## Claims

1. A data transmission method, comprising:
determining (301, 401, 501), by a first device, first information, wherein the first information is used to indicate a quantity of code blocks CBs to be sent over an air interface;
generating, by the first device, the CBs after performing coding by using a fountain code on a target transport block TB, and sending (302, 402, 502) a specified quantity of CBs to a second device based on the first information;
starting (403, 503), by the first device, a timer; and
the method being **characterized in that**:
before the timer times out, if the first device receives (505) a second information sent by the second device, increasing (506), based on the second information, the quantity of CBs to be sent over the air interface; or
when the timer times out, if the first device does not receive the second information sent by the second device, decreasing (405), by the first device, the quantity of CBs to be sent over the air interface.

2. The method according to claim 1, wherein the first device is an access network device; and
the determining, by a first device, first information (301, 401, 501) comprises:
determining, by the first device, the first information by using a Medium Access Control MAC layer of the first device; or
determining, by the first device, the first information by using a physical PHY layer of the first device based on a size of the target TB, modulation and coding scheme MCS information, and physical resource block PRB allocation information.

3. The method according to claim 1, wherein the first device is a terminal; and the determining, by a first device, first information (301, 401, 501) comprises:
receiving, by the first device, a MAC control element sent by the second device, wherein the MAC control element carries the first information; or
receiving, by the first device, downlink control information DCI sent by the second device, wherein the DCI carries the first information.

4. A data transmission apparatus, comprising:
a processing unit (801) and a transceiver unit (802), wherein
the processing unit (801) is configured to: determine first information, wherein the first information is used to indicate a quantity of code blocks CBs to be sent over an air interface; generate the CBs after performing coding by using a fountain code on a target transport block TB; and send a specified quantity of CBs to a second device based on the first information;
the processing unit (801) is further configured to start a timer; and
the apparatus being **characterized in that**:
before the timer times out, if the transceiver unit receives a second information sent by the second device, increase, based on the second information, the quantity of CBs to be sent over the air interface; or
when the timer times out, if the apparatus does not receive the second information sent by the second device, decrease the quantity of CBs to be sent over the air interface.

5. The apparatus according to claim 4, wherein the apparatus is an access network device; and
the processing unit (801) is specifically configured to:
determine the first information by using a Medium Access Control MAC layer of the apparatus; or
determine the first information by using a physical PHY layer of the apparatus based on a size of the target TB, modulation and coding scheme MCS information, and physical resource block PRB allocation information.

6. The apparatus according to claim 4, wherein the apparatus is a terminal; and the processing unit (801) is specifically configured to:
receive a MAC control element sent by the second device, wherein the MAC control element carries the first information; or
receive downlink control information DCI sent by the second device, wherein the DCI carries the first information.

## Patentansprüche

1. Datenübertragungsverfahren, umfassend:
Bestimmen (301, 401, 501), durch eine erste Vorrichtung, einer ersten Information,
wobei die erste Information verwendet wird, um eine Menge von Codeblöcken (CBs) anzugeben, die über eine Luftschnittstelle gesendet werden sollen;
Erzeugen, durch die erste Vorrichtung, der CBs nach dem Durchführen einer Codierung unter Verwendung eines Springbrunnencodes auf einem Ziel-Transportblock (TB) und Senden (302, 402, 502) einer festgelegten Menge von CBs an eine zweite Vorrichtung, basierend auf der ersten Information;
Starten (403, 503), durch die erste Vorrichtung, eines Zeitgebers; und
wobei das Verfahren durch Folgendes gekennzeichnet ist:
bevor der Zeitgeber abläuft, wenn die erste Vorrichtung eine von der zweiten Vorrichtung gesendete zweite Information empfängt (505), Erhöhen (506), basierend auf der zweiten Information, der Menge von CBs, die über die Luftschnittstelle gesendet werden sollen; oder
wenn der Zeitgeber abläuft, wenn die erste Vorrichtung die von der zweiten Vorrichtung gesendete zweite Information nicht empfängt, Verringern (405), durch die erste Vorrichtung, der Menge von CBs, die über die Luftschnittstelle gesendet werden sollen.

2. Verfahren nach Anspruch 1, wobei die erste Vorrichtung ein Zugangsnetzwerkgerät ist; und
das Bestimmen, durch eine erste Vorrichtung, der ersten Information (301, 401, 501) umfasst:
Bestimmen, durch die erste Vorrichtung, der ersten Information unter Verwendung einer Medienzugriffssteuerungs(MAC)-Schicht der ersten Vorrichtung; oder
Bestimmen, durch die erste Vorrichtung, der ersten Information unter Verwendung einer physischen (PHY) Schicht der ersten Vorrichtung basierend auf einer Größe des Ziel-TB, einer Modulations- und Codierungsschema(MCS)-Information und einer physischen Ressourcenblock(PRB)-Zuweisungsinformation.

3. Verfahren nach Anspruch 1, wobei die erste Vorrichtung ein Endgerät ist; und das Bestimmen, durch eine erste Vorrichtung, der ersten Information (301, 401, 501) umfasst:
Empfangen, durch die erste Vorrichtung, eines MAC-Steuerelements, das von der zweiten Vorrichtung gesendet wird,
wobei das MAC-Steuerelement die erste Information trägt; oder
Empfangen, durch die erste Vorrichtung, einer Downlink-Steuerinformation (DCI),
die von der zweiten Vorrichtung gesendet wird, wobei die DCI die erste Information trägt.

4. Datenübertragungsvorrichtung, umfassend:
eine Verarbeitungseinheit (801) und eine Transceivereinheit (802), wobei die Verarbeitungseinheit (801) konfiguriert ist, um:
die erste Information zu bestimmen, wobei die erste Information verwendet wird, um eine Menge von Codeblöcken (CBs) anzugeben, die über eine Luftschnittstelle gesendet werden sollen; die CBs nach dem Durchführen der Codierung unter Verwendung eines Springbrunnencodes auf einem Ziel-Transportblock (TB) zu erzeugen; und
eine festgelegte Menge von CBs an eine zweite Vorrichtung basierend auf der ersten Information zu senden;
die Verarbeitungseinheit (801) ferner konfiguriert ist, um einen Zeitgeber zu starten; und
wobei die Vorrichtung sich **dadurch kennzeichnet, dass**:
bevor der Zeitgeber abläuft, wenn die erste Transceivereinheit eine von der zweiten Vorrichtung gesendete zweite Information empfängt, die Menge von CBs, die über die Luftschnittstelle gesendet werden sollen, basierend auf der zweiten Information zu erhöhen; oder
wenn der Zeitgeber abläuft, wenn die Vorrichtung die von der zweiten Vorrichtung gesendete zweite Information nicht empfängt, die Menge von CBs, die über die Luftschnittstelle gesendet werden sollen, zu verringern.

5. Vorrichtung nach Anspruch 4, wobei die Vorrichtung ein Zugangsnetzwerkgerät ist;
und
die Verarbeitungseinheit (801) insbesondere konfiguriert ist, um:
die erste Information unter Verwendung einer Medienzugriffssteuerungs(MAC)-Schicht der Vorrichtung zu bestimmen; oder
die erste Information unter Verwendung einer physischen (PHY) Schicht der Vorrichtung, basierend auf einer Größe des Ziel-TB, einer Modulations- und Codierungsschema(MCS)-Information und einer physischen Ressourcenblock(PRB)-Zuweisungsinformation zu bestimmen.

6. Vorrichtung nach Anspruch 4, wobei die Vorrichtung ein Endgerät ist; und die Verarbeitungseinheit (801) insbesondere konfiguriert ist, um:
ein MAC-Steuerelement zu empfangen, das von der zweiten Vorrichtung gesendet wird, wobei das MAC-Steuerelement die erste Information trägt; oder
eine Downlink-Steuerinformation (DCI) zu empfangen, die von der zweiten Vorrichtung gesendet wird, wobei die DCI die erste Information trägt.

## Revendications

1. Procédé de transmission de données, comprenant les étapes consistant à :
déterminer (301, 401, 501), par un premier dispositif, une première information, la première information étant utilisée pour indiquer un nombre de blocs de code (CB) à envoyer sur une interface radio ;
générer, par le premier dispositif, les CB après la réalisation d'un codage au moyen d'un code fontaine sur un bloc de transport (TB) cible et envoyer (302, 402, 502) un nombre spécifié de CB à un second dispositif sur la base de la première information ;
démarrer (403, 503), par le premier dispositif, un temporisateur ;
et le procédé étant **caractérisé par** l'étape consistant à :
avant l'expiration du temporisateur, si le premier dispositif reçoit (505) une seconde information envoyée par le second dispositif, augmenter (506), sur la base de la seconde information, le nombre de CB à envoyer sur l'interface radio ; ou
quand le temporisateur expire, si le premier dispositif ne reçoit pas la seconde information envoyée par le second dispositif, diminuer (405), par le premier dispositif,
le nombre de CB à envoyer sur l'interface radio.

2. Procédé selon la revendication 1, dans lequel le premier dispositif est un dispositif de réseau d'accès ; et
la détermination, par un premier dispositif, d'une première information (301, 401, 501) comprend l'étape consistant à :
déterminer, par le premier dispositif, la première information au moyen d'une couche de contrôle d'accès au support (MAC) du premier dispositif ; ou
déterminer, par le premier dispositif, la première information au moyen d'une couche physique (PHY) du premier dispositif sur la base d'une taille du TB cible, d'une information de schéma de modulation et de codage (MCS) et d'une information d'affectation de bloc de ressources physiques (PRB).

3. Procédé selon la revendication 1, dans lequel le premier dispositif est un terminal ; et la détermination, par un premier dispositif, d'une première information (301, 401, 501) comprend l'étape consistant à :
recevoir, par le premier dispositif, un élément de contrôle MAC envoyé par le second dispositif, l'élément de contrôle MAC transportant la première information ; ou
recevoir, par le premier dispositif, une information de commande en liaison descendante (DCI) envoyée par le second dispositif, la DCI transportant la première information.

4. Appareil de transmission de données, comprenant :
une unité de traitement (801) et une unité émettrice-réceptrice (802),
l'unité de traitement (801) étant configurée pour: déterminer une première information, la première information étant utilisée pour indiquer un nombre de blocs de code (CB) à envoyer sur une interface radio ; générer les CB après la réalisation d'un codage au moyen d'un code fontaine sur un bloc de transport (TB) cible et
envoyer un nombre spécifié de CB à un second dispositif sur la base de la première information ;
l'unité de traitement (801) étant en outre configurée pour démarrer un temporisateur ;
et
l'appareil étant **caractérisé en ce que** :
avant l'expiration du temporisateur, si l'unité émettrice-réceptrice reçoit une seconde information envoyée par le second dispositif, augmenter, sur la base de la seconde information, le nombre de CB à envoyer sur l'interface radio ; ou
quand le temporisateur expire, si l'appareil ne reçoit pas la seconde information envoyée par le second dispositif, diminuer le nombre de CB à envoyer sur l'interface radio.

5. Appareil selon la revendication 4, l'appareil étant un dispositif de réseau d'accès ; et l'unité de traitement (801) étant spécifiquement configurée pour :
déterminer la première information au moyen d'une couche de contrôle d'accès au support (MAC) de l'appareil ; ou
déterminer la première information au moyen d'une couche physique (PHY) de l'appareil sur la base d'une taille du TB cible, d'une information de schéma de modulation et de codage (MCS) et d'une information d'affectation de bloc de ressources physiques (PRB).

6. Appareil selon la revendication 4, l'appareil étant un terminal ; et
l'unité de traitement (801) étant spécifiquement configurée pour :
recevoir un élément de contrôle MAC envoyé par le second dispositif, l'élément de contrôle MAC transportant la première information ; ou
recevoir une information de commande en liaison descendante (DCI) envoyée par le second dispositif, la DCI transportant la première information.
